# EUROPÄISCHE PATENTANMELDUNG

(11) **EP 0 560 446 A2**
(43) Veröffentlichungstag der Anmeldung: **15.09.1993**
(21) Anmeldenummer: 93200663.8
(22) Anmeldetag: 09.03.1993
(51) Int. Cl.: H04M 1/72, H04M 1/60, H04B 1/38

(54) **Nachrichtentechnisches Gerät mit einer Freisprecheinrichtung**

(30) Priorität: 10.03.1992 DE 4207507
(71) Anmelder: Philips Patentverwaltung GmbH, 22335 Hamburg (DE); Philips Electronics N.V., 5621 BA Eindhoven (NL)
(72) Erfinder: Walters, Eckhard, c/o Philips Patentverw. GmbH, W-2000 Hamburg 1 (DE)
(74) Vertreter: Volmer, Georg, Dipl.-Ing.

(57) **Zusammenfassung**

Bekannt sind Fernsprechapparate mit einem Handapparat mit internen elektroakustischen Wandlern, einer Handapparatauflage und außerhalb des Handapparates angebrachten zusätzlichen elektroakustischen Wandlern für einen Freisprechbetrieb.

Um eine flexible und kostengünstige Ausstattung solcher Fernsprecheinrichtungen zu erzielen, schlägt die Erfindung vor, die Freisprecheinrichtung im Handapparat anzuordnen. Auf diese Weise kann ohne Eingriff in das nachrichtentechnische Gerät allein durch Austausch des Handapparates eine Freisprecheinrichtung von jedermann nachgerüstet werden.

## Beschreibung

Die Erfindung betrifft ein nachrichtentechnisches Gerät mit einer Freisprecheinrichtung mit einem Handapparat mit internen elektroakustischen Wandlern, einer Handapparatauflage und außerhalb des Handapparates angebrachten zusätzlichen elektroakustischen Wandlern für einen Freisprechbetrieb.

Solche nachrichtentechnischen Geräte können zum einen Telefonapparate sein, die als sogenannte Komfortfunktion eine Freisprecheinrichtung aufweisen, die es ermöglicht, auch ohne den Handapparat in der Hand zu halten, ein Telefongespräch mit einem Gesprächspartner zu führen. Solche Freisprecheinrichtungen ermöglichen es einem, sich beispielsweise im Arbeitszimmer frei zu bewegen und Akten suchen zu können, ohne das Gespräch unterbrechen zu müssen. Aber auch in einem Kraftfahrzeug setzen sich Freisprecheinrichtungen in Verbindung mit einem Autotelefon immer mehr durch, da es auf diese Weise dem Fahrer ermöglicht wird, ein Gespräch zu führen und dennoch beide Hände zum Lenken des Kraftfahrzeuges uneingeschränkt benutzen zu können.

Aus der CH-PS 517421 ist ein Fernsprechapparat mit einer Fernsprecheinrichtung bekannt, bei dem eine Schaltungsanordnung mit Schaltkontakt zur Umschaltung vom Handapparatbetrieb in den Freisprechbetrieb sich in der Ablage des Handapparates befindet.

Aufgabe der Erfindung ist es, ein nachrichtentechnisches Gerät der eingangs genannten Art so zu gestalten, daß eine flexible und kostengünstige Ausstattung des nachrichtentechnischen Gerätes erreicht wird. Ein Anliegen der Erfindung ist es, daß hierdurch die Betriebssicherheit des nachrichtentechnischen Gerätes nicht beeinträchtigt werden darf.

Diese Aufgabe wird bei einem nachrichtentechnischen Gerät der eingangs genannten Art dadurch gelöst, daß die Freisprecheinrichtung im Handapparat angeordnet ist.

Die Erfindung bietet den Vorteil, daß das nachrichtentechnische Gerät selbst keine Freisprecheinrichtung aufweisen muß. Ohne Eingriff in das nachrichtentechnische Gerät kann auf diese Weise allein durch Anschluß eines anderen Handapparates und Anschluß von externem Mikrofon und Lautsprecher bzw. bei Vorhandensein eines entsprechenden Handapparats allein durch Anschluß von externen Mikrofon und Lautsprechers eine Freisprecheinrichtung nachgerüstet werden. Eine solche Nachrüstung ist für den Benutzer besonders kostengünstig, weil kein Kundendienstfachmann bemüht werden muß und ein eventueller Garantieverlust, wie er bei manchen nachrichtentechnischen Geräten vorgesehen ist, die nicht von hierzu autorisierten Fachpersonal geöffnet werden, befürchtet werden muß.

In einer Ausgestaltung der Erfindung sind am Handapparat und in der Handapparatauflage korrespondierende Koppelglieder vorgesehen, die bei in der Handapparatauflage aufgelegtem Handapparat die zusätzlichen für den Freisprechbetrieb vorgesehenen elektroakustischen Wandler mit der im Handapparat angeordneten Freisprecheinrichtung verbinden.

Als Koppelglieder eignen sich sowohl kontaktlose Kopplungen, wie z. B. Optokoppler oder induktive Übertrager als auch rein elektro-mechanische Kontakte. Elektro-mechanische Kontakte bieten den Vorteil, daß sie besonders billig sind, sodaß die Handapparatauflage unabhängig davon, ob sie mit einem Handapparat mit Freisprecheinrichtung oder mit einem Handapparat ohne Freisprecheinrichtung ausgeliefert wird, von vorneherein ohne allzu großen Kostenaufwand auch für Freisprechbetrieb ausgerüstet sein kann.

Durch die Anordnung der Freisprecheinrichtung im Handapparat und die korrespondierenden Koppelglieder läßt sich der Aufwand für Sprechkapsel- und Hörkapselanpassung und für eine Freisprecheinrichtung auf gegebenenfalls eine einzige, für beide Betriebsarten gemeinsame Schaltungsanordnung reduzieren. Auf diese Weise wird eine zusätzliche Stromversorgung für das Freisprechen nicht benötigt, was eine Reduzierung der Stromaufnahme ermöglicht. Speziell bei Handapparaten, die an einen Datenbus angeschlossen werden, werden keine zweiten Schnittstellenschaltungen benötigt. Hierdurch kann der Datenverkehr des Datenbusses reduziert werden. Dies ist insbesondere von Vorteil, wenn der Anschluß mehrerer Handapparate, beispielsweise für den Fahrer und für Mitreisende auf den Rücksitzen, an einen solchen Datenbus vorgesehen ist.

Durch die Koppelglieder, die nur im Freisprechbetrieb benötigt werden, werden für den Freisprechbetrieb keine zusätzlichen Leitungen in der Anschlußschnur des Handapparats benötigt. Dies trägt wesentlich zur Betriebssicherheit bei, da jede zuätzliche Leitung - in der ohnehin durch den Gebrauch einer erhöhten Gefahr eines Leitungsbruches ausgesetzen Anschlußschnur - das Risiko eines Ausfalls des Handapparats insgesamt erhöht, als auch auf diese Weise eventuelle Störeinstrahlungen oder Überkopplungen durch die zusätzlichen Leitungen in der Anschlußschnur vermieden werden.

In einer Ausgestaltung der Erfindung ist zur Umschaltung zwischen Freisprechbetrieb und Handapparatbetrieb die Auswertung des Zustandes eines im nachrichtentechnischen Gerätes enthaltenen sogenannten Gabelumschalters vorgesehen.

Diese Ausführungsform bietet den Vorteil, daß zum Umschalten in den Freisprechbetrieb die Betätigung einer besonders dafür-vorgesehenen Taste oder dergleichen durch den Benutzer nicht erforderlich ist. Nach dem Wählen der Telefonnummer ist als Voreinstellung der Freisprechbetrieb vorgesehen. Dies ist insbesondere beim Betrieb eines Autotelefones von Vorteil, da den Fahrzeuglenker keine besondere Konzentration auf eine Tastenbetätigung abgefordert wird und somit Seine Aufmerksamkeit dem Straßenverkehr voll gewidmet bleiben kann. Nur wenn der Handapparat abgehoben wird, wird durch Auswertung des Gabelumschalters vom Freisprechbetrieb in den Handappartbetrieb umgeschalten.

Die für den Freisprechbetrieb benötigten Mikrofone und Lautsprecher können beispielsweise direkt an der im Handapparat befindlichen Freisprecheinrichtung angeschlossen sein. Bei nicht ausreichender Ausgangsleistung der Freisprecheinrichtung kann noch ein Nachverstärker, beispielsweise im Handappart vorgesehen werden.

In einer weiteren Ausgestaltung der Erfindung wird durch die Freisprecheinrichtung bei aktiviertem Freisprechbetrieb ein Steuersignal erzeugt. Dieses Steuersignal kann dazu genutzt werden, sonstige im Kraftfahrzeug befindliche Audio-Geräte, wie Autoradio etc, stummzuschalten und so besonders vorteilhafte Bedingungen für den Freisprechbetrieb zu schaffen. Das Steuersignal kann darüberhinaus auch dazu genutzt werden, die Lautsprecher der Audio-Geräte, bzw. die Leistungsendstufe der Audio-Geräte als externen Lautsprecher für die Freisprecheinrichtung mitzuverwenden.

Wird mindestens das für die Freisprecheinrichtung verwendete Mikrofon durch eine sogenannte Phantomspeisung mit einer Betriebsspannung versorgt, so kann das Steuersignal vorzugsweise aus der Detektierung der Betriebsspannung dieses Mikrofons gewonnen werden. Dies hat den Vorteil, daß für das Steuersignal keine zusätzliche Leitung vom Handapparat weggeführt zu werden braucht.

In einer besonderen Ausgestaltung ist die Schnittstelle zwischen Handapparat und nachrichtentechnischem Gerät eine digitale Schnittstelle. Bei dieser Ausgestaltung werden über die Anschlußschnur zwischen Handapparat und dem nachrichtentechnischen Gerät bzw. mit dem nachrichtentechnischen Gerät verbundene Handapparatauflage nur digitale Signale übertragen, während die analogen Signale, die zu den für den Freisprechbetrieb vorgesehenen zusätzlichen elektroakustischen Wandler führen, bzw. rückführen, als analoge Signalleitungen ausgeführt sind. Diese analogen Signale werden über die korrespondierenden Kontakte geführt. Dies bietet den Vorteil, daß digitale Signale und analoge Signale voneinander getrennt sind und eine Beeinträchtigung zwischen diesen beiden Signalen weitgehend ausgeschlossen ist. Da die analogen Signale nicht erst über die zwischen Handapparat und Handapparatauflage liegende Anschlußschnur zur Fernsprecheinrichtung laufen müssen, werden durch die kürzere Leitungslänge Signalverluste verringert.

Die Erfindung wird nun anhand eines in der Zeichnung dargestellten Ausführungsbeispiels näher beschrieben und erläutert.

Es zeigen:
- Figur 1: einen auf einer Handapparateauflage aufgelegten Handapparat in bildlicher Darstellung
- Figur 2: eine Anschlußschaltung der Freisprecheinrichtung in schematischer Darstellung
- Figur 3: Anschlußschema des Handapparats und einem zwischen Handapparat und Endstufe eines Autoradios eingeschleiften Umschaltung
Als Beispiel für ein nachrichtentechnisches Gerät wurde im Ausführungsbeispiel ein Mobilfunkgerät gewählt. Zum Bedienen des Mobilfunkgerätes ist ein Handapparat vorgesehen, der zum Wählen einer Rufnummer auf seiner Außenseite eine nicht dargestellte Wähleinrichtung aufweist, die es ermöglicht, das Mobilfunkgerät auch bei aufgelegtem Handapparat zu bedienen. Wegen der Möglichkeit dieser Bedienfunktion wird dieser Handapparat daher im folgenden als Bedienhörer bezeichnet.

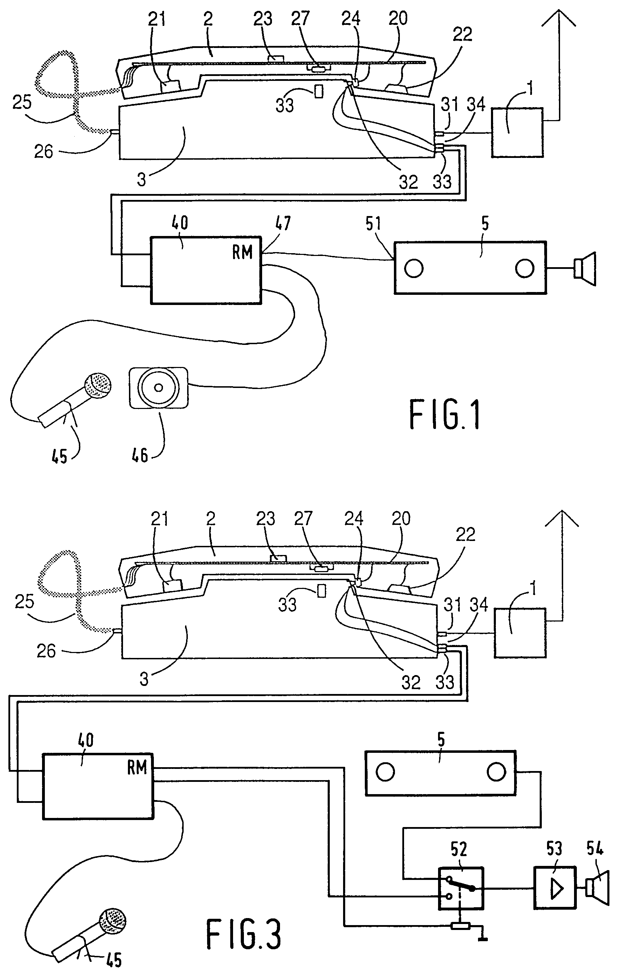

Anhand der Figur 1 wird nun zunächst der mechanische Aufbau beziehungsweise das Zusammenwirken der räumlich getrennt erfaßbaren Komponenten des Mobilfunkgerätes beschrieben.

Der Bedienhörer 2 ist über eine Anschlußschnur 25 an einer Bedienhörerauflage 3 mittels einer lösbaren Steckverbindung 26 angeschlossen. Die Bedienhörerauflage 3, die beispielsweise in einem Kraftfahrzeug in Griffnähe des Fahrzeugführers montiert werden kann, ist mittels einer weiteren Anschlußschnur 31 mit einem Mobilteil 1 verbunden, in welchem sich die einem Fachmann geläufigen Baugruppen für Steuerung, Sende- und Empfangsteil eines Mobilfunkgerätes befinden.

Die Ankoppelung eines externen Mikrofons 45 und eines externen Lautsprechers 46 erfolgt in der beschriebenen bevorzugten Ausführungsform mittels eines dem Bedienhörer nachgeordneten Erweiterungsmoduls 40, in welchem ein Steuersigflal RM (rm = radio mute) zur Stummschaltung eines Autoradios 5 erzeugt wird. Dieses Steuersignal RM ist am Erweiterungsmodul 40 über eine Anschlußbuchse 47 herausgeführt, und kann einem entsprechenden Eingang 51 eines Autoradios 5 zugeführt werden. Auf dem Markt befinden sich bereits Autoradios, die serienmäßig mit einem Eingang zur Stummschaltung ausgestattet sind. Beispielsweise der "Verein Deutscher Automobilhersteller" hat sich auf eine solche Schnittstelle geeinigt.

Der Bedienhörer 2 weist in seinem Inneren eine Sprechkapsel 21 und eine Hörkapsel 22 auf, deren Anschlußleitungen mit einer im Bedienhörer 2 angeordneten Leiterplatte 20 verbunden sind. Auf der Innenseite des Bedienhörers 2 sind vergoldete Metallplättchen 24 angeordnet, die als elektrische Kontakte ausgebildet sind und über Anschlußdrähte mit der Leiterplatte 20 verbunden sind. An der Bedienhörerauflage 3 sind federnde Kontakte 32 angeordnet, die bei in der Bedienhörerauflage 3 aufgelegtem Bedienhörer 2 an die korrespondierenden Metallplättchen 24 des Bedienhörers 2 andrücken und so bei aufgelegtem Bedienhörer 2 einen elektrischen Kontakt zwischen Bedienhörer 2 und Bedienhörerauflage 3 schaffen.

Im Ausführungsbeispiel sind vier Metallplättchen 24 bzw. hierzu korrespondierende Federkontakte 32 vorgesehen. Die auf der Bedienhörerauflage 3 angeordneten Federkontakte 32a, 32b beziehungsweise 32c und 32d sind im Inneren der Bedienhörerauflage 3 mit an der Bedienhörerauflage 3 angeordneten Steckverbindungen 33 beziehungsweise 34 verbunden. Mittels entsprechender Anschlußleitungen könnten an diesen Steckverbindungen 33, 34 anstelle des Erweiterungsmoduls 40 ein externes Mikrofon beziehungsweise ein externer Lautsprecher auch direkt angeschlossen werden.

In dem Ausführungsbeispiel ist eine sogenannte Gabelumschaltung derart realisiert, daß in der Bedienhörerauflage 3 ein Dauermagnet 33 derart angeordnet ist, daß bei aufgelegtem Bedienhörer der Kontakt eines im Bedienhörer an entsprechender Stelle angeordneten magnetischen Schaltkontaktes 27 geschlossen wird. Durch Auswertung des Schaltzustandes des magnetischen Schaltkontaktes 27 kann somit festgestellt werden, ob der Bedienhörer auf der Bedienhörerauflage 3 aufliegt oder davon abgehoben ist.

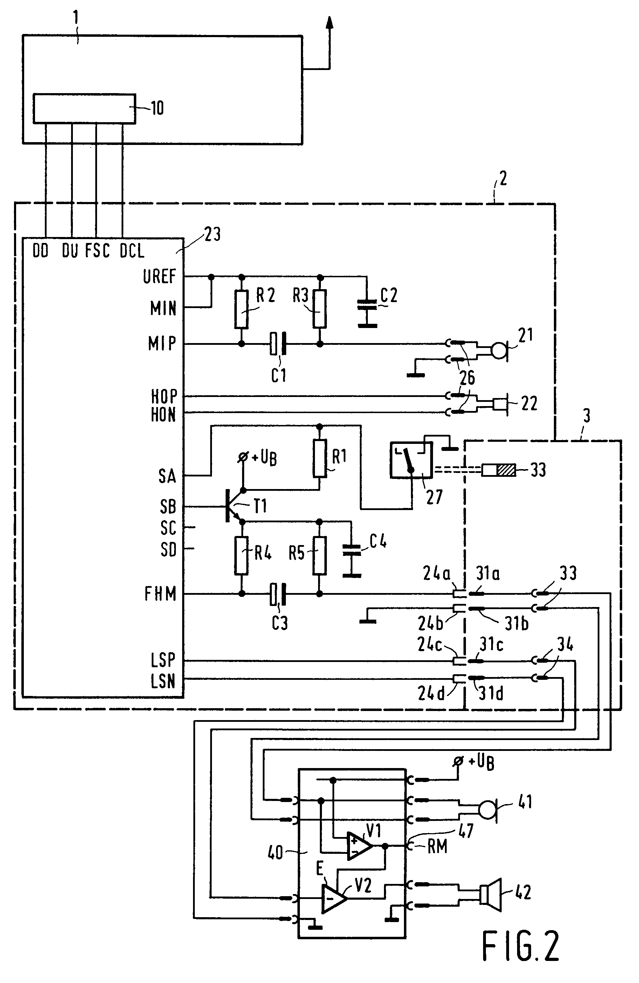

Auf der Leiterplatte 20 ist eine Schaltungsanordnung 23 vorgesehen, mittels welcher eine Freisprech-Funktion realisiert werden kann. Anhand der Figur 2 wird beispielhaft anhand einer bekannten, für einen Freisprechbetrieb vorgesehen Integrierten Schaltung eine geeignete Schaltungsanordnung zur Ausführung der Erfindung im Einzelnen beschrieben.

Eine Schaltungsanordnung mit der sowohl ein Handapparatbetrieb als auch ein Freisprechbetrieb realisiert werden kann, wird als Integrierte Schaltung, von der Fa. Siemens unter der Bezeichnung PSB 2165 vertrieben und in Ihrem Datenblatt "IC's for Communications, PSB 2165, Audio Ringing Codec Filter Featuring Speakerphone Function" beschrieben. Diese Integrierte Schaltung ist für den Anschluß an eine genormte ISDN-Schnittstelle IOM2 (IOM = ISDN Oriented Modular) ausgelegt. Über diese schnittstelle können durch entsprechende Steuerbefehle einzelne Funktionen dieses Bausteins ausgewählt, beziehungsweise aktiviert und deaktiviert werden, als auch digitalisierte Sprachsignale ausgetauscht werden. Zusätzlich zu den Anschlüssen DD, DU FSC und DCL der IOM2-Schnittstelle, weist diese Integrierte Schaltung unter anderen folgende Anschlüsse auf: MIP und MIN für ein Mikrofon eines Bedienhörers, zwei Anschlüsse HOF und HON für einen Lautsprecher eines Bedienhörers, einen Anschluß FHM für ein externes Mikrofon, zwei Anschlüsse LSP und LSN für einen externen Lautsprecher, vier Anschlüsse SA, SB, SC, SD, welche wahlweise als digitaler Eingang oder Ausgang verwendet werden können und einen Anschluß VREF für eine wahlweise zuschaltbare Referenzspannung.

Der Erfindung lag die Erkenntnis zugrunde, daß für den Freisprechbetrieb der Handapparat 2 zur Bedienung nicht mehr benötigt wird, und der Bedienhörer in der Bedienhörerauflage 3 abgelegt bzw. bei einem Betrieb in einem Fahrzeug vorzugsweise auch arretiert werden kann. Ob nun Freisprechbetrieb oder Benutzung des Bedienhörers gewünscht ist, kann daher aus der Position des Bedienhörers geschlossen werden, ohne daß hierzu weitere Schalter zu betätigen sind.

Durch Auswertung des Schaltzustandes des magnetischen Schaltkontaktes 27 ist bei aufgelegtem Bedienhörer 2 die Schaltungsanordnung in den Freisprechbetrieb geschaltet. Hierzu ist ein Anschluß des Schaltkontaktes 27 mit Masse und der andere Schaltkontakt mit dem ersten Eingang SA der Schaltungsanordnung 23 verbunden. Da dieser erste Eingang SA ferner noch mit einem Widerstand R1 mit Versorungsspannung verbunden ist, steht bei aufgelegten Bedienhörer 2, und somit durch den Magneten 33 geschlossenen Schaltkontakt 27 am ersten Eingang SA ein LOW-Signal an, bei abgehobenen Bedienhörer 2 jedoch High-Signal an. Eine im Mobilfunkgerät 1 angeordnete Steuerschaltung 10, die über die IOM2-Schnittstelle mit dem im Handapparat 2 angeordneten Freisprechschaltungsanordnung 23 verbunden ist, fragt den logischen Zustand des ersten Eingang SA in wiederkehrenden Zeitabständen ab und schaltet die Freisprechschaltung in den jeweils detektivsten Betriebszustand.

Bei in der Bedienhörerauflage 3 aufgelegtem Bedienhörer 2 sind das externe Mikrofon 45 und der externe Lautsprecher 46 über die Federkontakte 32 und die dazu korrespondierenden Kontaktflächen 24 über das Erweiterungsmodul 40 mit den für den Freisprechbetrieb vorgesehenen Ein- und Ausgängen FHM beziehungsweise LSP und LSN verbunden. Solange der Bedienhörer abgenommen ist, ist jedoch die Verbindung zwischen der Freisprechschaltungsanordnung 23 und dem externen Mikrofon 45 und dem externen Lautsprecher 46 zwangsläufig gelöst.

Zur Stromversorgung des internen Mikrofons 21 des Bedienhörers ist im Ausführungsbeispiel eine sogenannte Phantomspeisung vorgesehen. Solange die im Mobilfunkgerät 1 angeordnete Steuerschaltung 10 den abgehobenen Zustand des Bedienhörers 2 detektiert, schaltet sie über die IOM2-Schnittstelle die Referenzspannung UREF der Freisprechschaltungsanordnung 23 an. Mittels Widerständen R2, R3 und Kondensatoren C1, C2 wird diese Referenzspannung UREF dem internen Mikrofon des Bedienhörers 2 zugeführt.

Eine gleichartige aus den Widerständen R4, R5 und den Kondensatoren C3, C4 gebildete zweite Phantomspeisung dient zur Stromversorgung des externen Mikrofons 45. Zum Einschalten der Phantomspeisung aktiviert die im Mobilfunkgerät angeordnete Steuerschaltung über die IOM2-Schnittstelle den zweiten Ausgangsport SB der Freisprechschaltungsanordnung 23. Mit diesem Ausgangsport SB ist die Basis eines Schalttransistors T1 verbunden. Der Kollektor dieses Schalttransistors T1 ist mit Betriebsspannung +U_{B} und der Emitter dieses Schalttransistors T1 mit jeweils einem Anschluß der Widerstände R4, R5 verbunden. Bei High-Signal am Ausgang des zweiten Ausgangsports SB wird hierdurch der Schalttransistor in leitenden Zustand versetzt und schaltet somit die Betriebsspannung +U_{B} zur Stromversorgung des externen Mikrofons 45 hinzu.

In dem Erweiterungsmodul 4 ist in der bevorzugten Ausführungsform ein Komparator V1 dessen nicht invertierender Eingang mit der im Freisprechbetrieb phantomgespeisten Leitung des externen Mikrofons 45 und dessen invertierender Eingang mit Betriebsspannung +U_{B} verbunden ist. Bei abgenommenem Bedienhörer 2 ist diese Leitung spannungsfrei, wodurch der Spannungskomparator V1 kein Ausgangssignal erzeugt. Im Freisprechbetrieb hingegen erzeugt der Spannungskomparator V1 wegen der Phantomspeisespannung ein Ausgangssignal, welches an eine Anschlußbuchse 47 abgegeben wird. Auf diese Weise kann ein Radio-Stummsignal RM erzeugt werden, ohne daß hierzu zusätzliche elektrische Kontakte im Bedienhörer bzw. in der Bedienhörerauflage erforderlich wären.

Desweiteren ist im Erweiterungsmodul 4 ein Verstärker V2 vorgesehen, mittels welchem eine zusätzliche Leistungsanhebung des Lautsprechersignals im Freisprechbetrieb vorgenommen wird. Durch einen im Verstärker V2 vorgesehenen Enable-Eingang E, dem ebenfalls das Ausgangssignal des Komparators V1 zugeführt ist, wird dieser Verstärker V2 jeweils nur im Freisprechbetrieb zugeschaltet.

Wahlweise zu dieser Form der Leistungsanhebung des über den externen Lautsprecher 46 abzugebenden Freisprechsignals, kann in einer in Figur 3 dargestellten Ausführungsform die Endstufe des Autoradios mitverwendet werden. Hierzu ist ein elektronischer Umschalter 52, beispielsweise ein Relais vorgesehen, welches in Abhängigkeit des von der Freisprecheinrichtung erzeugten Steuersignals RM eine Umschaltung zwischen zwei Eingängen vornimmt. An einem Eingang des Umschalters 52 ist das Ausgangssignal des Autoradios 5 und am anderen Eingang des Umschalters 52 der Ausgang der Freisprecheinrichtung 23 angeschlossen. Der Ausgang des Umschalters 52 ist an den Eingang der Endstufe 53 des Autoradios geführt.

Bei Freisprechbetrieb wird auf diese Weise der Lautsprecherausgang LSP der Freisprecheinrichtung 23 an die Endstufe des Autoradios geschaltet und gleichzeitig der Ausgang des Autoradios von dieser Endstufe 53 getrennt. Auf diese Weise wird bei Freisprechbetrieb in vorteilhafter Weise die Endstufe und das Lautsprechersystem 54 des Autoradios mitverwendet und gleichzeitig die Wiedergabe des gerade empfangenen Radioprogrammes, bzw. Cassetten- oder CD-Wiedergabe unterbrochen.

Da, besonders bei hochwertigen Autoradios die Endstufe 53 häufig sowieso als seperates Zusatzgerät ausgeführt ist, bereitet das Einschleifen des Umschalters 52 auch keine besonderen Probleme bei dessen Einbau.

Im übrigen gibt es auch Autoradios mit im Autoradio angeordneter Endstufe 53, bei denen das Ausgangssignal des Autoradios und der Eingang der Endstufe an einer Buchse herausgeführt sind, wobei beispielsweise durch einen Kurzschlußstecker im Normalbetrieb das Ausgangssignal des Autoradios an den Eingang der Endstufe durchgeschleift wird. In diesem Fall kann der Umschalter 53 natürlich gleich an die Buchse angeschlossen werden.

## Patentansprüche

1. Nachrichtentechnisches Gerät mit einer Freisprecheinrichtung mit einem Handapparat mit internen elektro-akustischen-Wandlern, einer Handapparatauflage und außerhalb des Handapparates angebrachten zusätzlichen elektro-akustischen Wandlern für einen Freisprechbetrieb,
dadurch gekennzeichnet,
daß die Freisprecheinrichtung (23) im Handapparat (2) angeordnet ist.

2. Nachrichtentechnisches Gerät nach Anspruch 1,
dadurch gekennzeichnet,
daß am Handapparat (2) und in der Handapparatauflage (3) korrespondierende Koppelglieder (24, 32) vorgesehen sind, die bei in der Handapparatauflage (3) aufgelegtem Handapparat (2) die zusätzlichen für den Freisprechbetrieb vorgesehenen elektro-akustischen Wandler (45, 46) mit der im Handapparat (2) angeordneten Freisprecheinrichtung (23) verbinden.

3. Nachrichtentechnisches Gerät nach Anspruch 2,
dadurch gekennzeichnet,
daß die korrespondierenden Koppelglieder (41, 42) elektromechanische Kontakte sind.

4. Nachrichtentechnisches Gerät nach Anspruch 1, 2 oder 3
dadurch gekennzeichnet,
daß zur Umschaltung zwischen Freisprechbetrieb und Handapparatbetrieb die Auswertung des Zustandes eines im nachrichtentechnischen Gerätes enthaltenen sogenannten Gabelumschalters (27) vorgesehen ist.

5. Nachrichtentechnisches Gerät nach Anspruch 1, 2, 3, oder 4,
dadurch gekennzeichnet,
daß im Freisprechbetrieb zum Stummschalten eines Audiogerätes (5) die Abgabe eines Steuersignals (RM) vorgesehen ist.

6. Nachrichtentechnisches Gerät nach Anspruch 5,
dadurch gekennzeichnet,
daß vorgesehen ist, das Steuersignal zur Steuerung eines Umschalters (51) zu verwenden, mittels welchem eine dem Audiogerät (5) zugeordeten Endstufe 52 auf den Ausgang (LSP) der Freisprecheinrichtung (23) umgeschaltet werden kann.

7. Nachrichtentechnisches Gerät nach Anspruch 5 oder 6
dadurch gekennzeichnet,
daß vorgesehen ist, dieses Steuersignal (RM) aus der Speisespannung des externen Mikrofons (45) zu gewinnen.

8. Nachrichtentechnisches Gerät nach Anspruch 1, 2, 3, 4, 5, 6 oder 7
dadurch gekennzeichnet,
daß die zwischen Handapparat (2) und nachrichtentechnischem Gerät (1) vorgesehene Schnittstelle eine digitale Schnittstelle ist.

9. Nachrichtentechnisches Gerät nach Anspruch 1, 2, 3, 4, 5, 6, 7 oder 8
dadurch gekennzeichnet,
daß das nachrichtentechnische Gerät (1) ein Mobiltelefon ist.
